# FASCICULE DE BREVET EUROPEEN

(11) **EP 4 363 537 B1**
(45) Date de publication et mention de la délivrance du brevet: **28.05.2025**
(21) Numéro de dépôt: 22741248.3
(22) Date de dépôt: 30.06.2022
(51) Int. Cl.: C10M 173/02, C10N 30/06, C10N 40/20

(54) **COMPOSITION LUBRIFIANTE AQUEUSE POUR LE TRAVAIL DES MÉTAUX**
WÄSSRIGE SCHMIERMITTELZUSAMMENSETZUNG FÜR DIE METALLBEARBEITUNG
AQUEOUS LUBRICANT COMPOSITION FOR METALWORKING

(30) Priorité: 01.07.2021 FR 2107132
(43) Date de publication de la demande: 08.05.2024
(73) Titulaire: TotalEnergies OneTech, 92400 Courbevoie (FR)
(72) Inventeur: FRELECHOUX, Richard, 69360 Solaize (FR)
(74) Mandataire: Cabinet Nony
(86) Numéro de dépôt international: PCT/EP2022/068173
(87) Numéro de publication internationale: WO 2023/275307

(56) Documents cités:
- EP-A1- 0 288 375
- WO-A1-99/43769
- WO-A2-03/042342

## Description

### Domaine technique

La présente invention concerne le domaine des compositions lubrifiantes, et plus particulièrement des compositions lubrifiantes mises en œuvre dans les procédés de travail des métaux, telles que les opérations d'usinage de pièces métalliques. En particulier, la présente invention concerne des compositions lubrifiantes à base aqueuse.

### Technique antérieure

Les compositions lubrifiantes, dites encore « lubrifiants », sont couramment mises en œuvre dans des systèmes mécaniques, pour réduire les frottements entre les pièces et ainsi les protéger contre l'usure. Outre les phénomènes d'usure, les frottements peuvent s'opposer au mouvement relatif des pièces en contact et induire des pertes d'énergie préjudiciables à un fonctionnement optimal du système mécanique.

Les lubrifiants sont mis en œuvre pour de multiples applications, de la lubrification de moteurs de véhicule à combustion à la lubrification de machines mises en œuvre pour des opérations d'usinage, ce que l'on appelle dans le langage courant le travail des métaux, notamment pour des opérations de déformation de métaux.

Le travail des métaux correspond plus généralement à la mise en œuvre de procédés mécaniques ou métallurgiques, à la fois diversifiés ou plus spécialisés, qui peuvent être définis comme des procédés de conformation, de découpe ou de jointage. Cela peut également concerner toute transformation mécanique du métal, telle que l'usinage (tournage, fraisage, perçage, sciage, filetage entre autres), le formage, la découpe, l'estampage, ou encore le laminage.

Les opérations relatives au travail des métaux nécessitent tout particulièrement la mise en œuvre de compositions lubrifiantes, dans le but de réduire les forces de friction entre les parties en métal en contact et de prévenir leur usure prématurée, tout en garantissant avantageusement un refroidissement de ces dernières.

Ces compositions lubrifiantes, dédiées à la lubrification dans des procédés d'usinage des métaux, sont également couramment désignées sous les dénominations « compositions ou fluides de travail des métaux », « lubrifiants ou fluides d'usinage » ou encore « lubrifiants ou fluides de coupe ».

Classiquement, les formulations lubrifiantes mises en œuvre pour de telles opérations d'usinage sont des lubrifiants composés majoritairement d'une ou plusieurs huiles de base, auxquelles sont généralement associés des additifs dédiés à stimuler les performances lubrifiantes des huiles de base, comme par exemple des additifs modificateurs de frottement. D'une manière générale, ces formulations lubrifiantes sont classées au regard du type d'huile qu'elles intègrent. Ainsi :
- Les fluides minéraux, non-renouvelables, sont ceux comprenant des huiles minérales, telles que les huiles paraffiniques, aromatiques ou naphténiques, dans leur formulation de base ;
- Les fluides renouvelables, d'origine végétale ou animale, sont ceux comprenant des huiles végétales, animales ou des graisses dans leur formulation de base ;
- Les fluides minéraux d'origine synthétique sont ceux comprenant des huiles minérales ou des dérivés pétrochimiques chimiquement modifiés, dans leur formulation de base comme, par exemple, des polyalphaoléfines, des polyalkylène glycols et des huiles minérales hydrogénées ;
- Les fluides renouvelables d'origine synthétique sont ceux comprenant des huiles végétales ou animales chimiquement modifiées, dans leur formulation de base comme, par exemple, des esters d'huiles végétales, des huiles végétales sulfitées, oxydées, estérifiées, ou encore des huiles animales sulfatées.

Certaines formulations, dites mixtes, comprennent un mélange des huiles listées ci-dessus dans leur formulation de base. Les plus connues sont appelées les huiles semi-synthétiques et correspondent à un mélange d'huiles synthétiques et minérales.

Cependant, l'utilisation d'huiles ou de graisses dans des compositions lubrifiantes pour le travail des métaux présentent plusieurs désavantages. En particulier, les lubrifiants à base huileuse présentent généralement une faible résistance aux attaques microbiennes, de faibles propriétés de refroidissement ou encore un impact négatif sur l'environnement de travail, la santé ou encore la sécurité.

Des lubrifiants sous forme d'émulsion, comprenant une phase aqueuse ajoutée à une phase huileuse, ont ainsi été développés. Cependant, ces lubrifiants présentent une faible stabilité en partie due à la dureté de l'eau et/ou à la salinité.

Dans le but de résoudre les problèmes liés à la mise en œuvre de formulations lubrifiantes à base d'huiles dans des applications pour travail des métaux, des compositions à base d'eau ont montré un certain intérêt. Ces formulations comprennent généralement de l'eau, supplémentée par divers additifs afin de garantir les propriétés tribologiques requises pour les lubrifiants, en particulier en termes de réduction du frottement et de protection des pièces contre l'usure.

A titre d'exemples, on peut ainsi citer les documents WO 2009/106359 et WO 2012/163550 qui décrivent des compositions lubrifiantes aqueuses comprenant notamment de l'eau et des sels de carboxyméthylcellulose.

On peut également citer le document EP 3 042 946 qui propose un fluide de travail des métaux, exempt d'huile et d'émulsifiant, comprenant entre 0,1 et 2 % en poids d'un polymère de type cellulosique.

Enfin, le document GB 1 272 100 propose un lubrifiant aqueux pour le travail des métaux comprenant (1) un polypropylène glycol linéaire ou un copolymère oxyde d'éthylène/oxyde de propylène de masse moléculaire comprise entre 2 000 et 9 000 Da, et (2) une polyvinyle pyrrolidone, un éther de cellulose ou un phosphate de triéthanolamine.

Le document EP 0 288 375 A1 décrit un fluide fonctionnel aqueux pour le travail des métaux avec des propriétés extrême-pression améliorées.

Pour des raisons évidentes, l'optimisation des performances des lubrifiants aqueux pour le travail des métaux relève d'un objectif permanent. En particulier, on cherche à améliorer de manière constante les propriétés tribologiques des lubrifiants, en particulier les propriétés anti-usure et extrême-pression.

### Exposé de l'invention

La présente invention propose ainsi une nouvelle composition lubrifiante aqueuse présentant des propriétés tribologiques, en particulier anti-usure et extrême-pression, améliorées, adaptées à sa mise en œuvre pour le travail des métaux,

Ainsi, la présence invention concerne, selon un premier de ses aspects, une composition lubrifiante aqueuse, en particulier pour le travail des métaux, comprenant au moins :
- au moins 50 % massique de l'eau, de préférence de l'eau osmosée ;
- de 0,01 % à 10 % massique d'au moins un polysaccharide ;
- de 0,1 % à 10 % massique d'au moins une huile de ricin alcoxylée, en particulier éthoxylée ;
- de 0,1 % à 10 % massique d'au moins un composé anti-usure soufré et/ou phosphoré,
les pourcentages étant exprimés par rapport à la masse totale de la composition.

Selon un mode de réalisation, une composition lubrifiante aqueuse selon l'invention comprend en outre au moins un polyalkylène glycol, en particulier tel que décrit dans la suite du texte.

Par « composition aqueuse » au sens de la présente invention, on entend désigner une composition comprenant de l'eau à titre de fluide de base, autrement dit à titre de solvant majoritaire. En particulier, l'eau, de préférence osmosée, représente au moins 50 % massique de la masse totale de la composition lubrifiante.

Dans la suite du texte, on désignera par « composition lubrifiante aqueuse » ou « lubrifiant aqueux », une composition lubrifiante selon l'invention.

Par « eau osmosée » au sens de la présente invention, on entend désigner une eau ayant subi une purification, notamment par un procédé d'osmose inverse, afin de réduire la teneur en composés organiques et/ou minéraux, par exemple à une teneur inférieure à 5,0 % en poids, de préférence inférieure à 1,0 % en poids. Dans la suite du texte, les expressions « eau déminéralisée » ou encore « eau ultrapure » seront considérées comme équivalentes ou synonymes de l'expression « eau osmosée ». En particulier, l'eau osmosée peut être une « eau déionisée », autrement dit une eau ayant subi une purification afin de réduire la teneur en ions, tels que les ions Ca²⁺ et HCO₃⁻ généralement présents dans l'eau. De préférence une eau déionisée ne comprend pas d'ions.

Contre tout attente, les inventeurs ont découvert que la mise en œuvre combinée d'au moins un polysaccharide, d'une huile de ricin alcoxylée, en particulier éthoxylée et d'au moins un composé anti-usure phosphoré et/ou soufré, permet d'accéder à un fluide aqueux présentant d'excellentes propriétés tribologiques, en particulier dans des conditions d'extrême-pression, adaptées à sa mise en œuvre comme lubrifiant pour le travail des métaux.

En particulier, comme illustré dans les exemples qui suivent, les inventeurs ont montré qu'il est possible, en supplémentant une formulation lubrifiante aqueuse comprenant au moins un polysaccharide, par l'association spécifique d'au moins un anti-usure soufré et/ou phosphoré et d'une huile de ricin alcoxylée, de préférence éthoxylée, d'améliorer de manière significative les propriétés tribologiques de la formulation lubrifiante aqueuse, en particulier les propriétés anti-usure et extrême-pression.

La combinaison d'au moins une huile de ricin alcoxylée, en particulier éthoxylée, et d'au moins un composé anti-usure soufré et/ou phosphoré, au niveau d'une composition lubrifiante aqueuse comprenant au moins un polysaccharide, présente de manière inattendue un effet synergique sur l'amélioration des propriétés anti-usure et extrême-pression du lubrifiant aqueux.

La composition lubrifiante aqueuse selon l'invention présente ainsi des performances de réductions des frottements, en particulier dans des conditions d'extrême-pression, améliorées, comparativement à une composition ne comprenant pas d'huile de ricin alcoxylée ou de composé anti-usure selon l'invention.

Les propriétés anti-usure et extrême-pression peuvent être évaluées par un test 4 billes extrême-pression, en particulier selon la norme ASTM D2783, tel que détaillé dans les exemples ci-après. Comme démontré dans les exemples, une composition lubrifiante aqueuse selon l'invention atteint des valeurs de charge de soudure élevées, sans augmentation significative du diamètre d'usure, ce qui témoigne de ses excellentes propriétés tribologiques.

L'invention concerne ainsi l'utilisation de la combinaison d'au moins une huile de ricin alcoxylée, en particulier éthoxylée, et d'au moins un composé anti-usure phosphoré et/ou soufré, en particulier soufré, dans une composition lubrifiante aqueuse comprenant au moins un polysaccharide, pour améliorer ses propriétés anti-usure et/ou extrême-pression.

Ainsi, les compositions aqueuses selon l'invention s'avèrent particulièrement avantageuses pour une mise en œuvre en tant que lubrifiants pour le travail des métaux. Elles peuvent ainsi être employées à titre de fluides de travail des métaux, pour diverses applications, en substitution des lubrifiants conventionnellement mis en œuvre, notamment des lubrifiants hydrocarbonés.

L'invention concerne ainsi, selon un autre de ses aspects, l'utilisation d'une composition lubrifiante aqueuse selon l'invention, à titre de lubrifiant dans un procédé de travail des métaux.

Une composition aqueuse selon l'invention peut être plus particulièrement mise en œuvre à titre de lubrifiant dans toute opération d'usinage des métaux, par exemple dans des procédés de conformation, de découpe, de jointage ou toute autre transformation du métal telle que le formage, l'estampage, le laminage, etc.

Elle peut être destinée à être mise en œuvre pour le travail de métaux variés, tels que l'aluminium, l'acier, l'acier galvanisé ou encore les métaux jaunes.

L'invention concerne encore un procédé pour le travail des métaux mettant en œuvre, à titre de lubrifiant, une composition aqueuse lubrifiante selon l'invention. Ledit procédé comprend en particulier une étape d'application d'une composition aqueuse lubrifiante selon l'invention à la surface d'au moins une partie de l'outil (ou appareillage) d'usinage et/ou d'une pièce à usiner en métal.

Le fluide lubrifiant selon l'invention permet avantageusement de réduire les frictions entre l'outil ou l'appareillage d'usinage et la pièce métallique usinée.

L'invention concerne ainsi l'utilisation d'une composition lubrifiante aqueuse selon l'invention pour réduire les frottements au cours d'une opération d'usinage d'une pièce métallique.

Par ailleurs, de manière avantageuse, une composition lubrifiante aqueuse conduit à une faible quantité de résidus gommeux, après son utilisation au niveau de l'appareillage mis en œuvre pour l'usinage des métaux.

Les « résidus gommeux » sont des résidus relativement visqueux et insolubles en phase aqueuse, pouvant apparaître postérieurement aux opérations d'usinage. Plus particulièrement, une fois l'appareillage d'usinage à l'arrêt, le lubrifiant, soumis à une déshydratation ambiante, est susceptible de conduire à la formation de sels qui, combinés aux polymères présents au niveau du lubrifiant, peuvent former ces résidus gommeux.

Les résidus gommeux adhèrent sur les parois de l'outillage et sont susceptibles d'engendrer un blocage de l'outil d'usinage, nécessitant généralement des opérations indésirables de maintenance sur la machine.

Enfin, de manière avantageuse, une composition lubrifiante selon l'invention, formée majoritairement d'eau, présente peu d'impact toxicologique notamment pour les personnes mettant en œuvre ce lubrifiant. De façon avantageuse, quand bien même l'eau est le solvant majoritaire d'un lubrifiant aqueux selon l'invention, la surface traitée est correctement lubrifiée.

De plus, la présence d'une proportion importante en eau permet de faciliter le nettoyage des surfaces métalliques et l'élimination du lubrifiant après usinage, notamment par simple passage ou rinçage à l'eau.

D'autres caractéristiques, variantes et avantages d'une composition lubrifiante aqueuse selon l'invention ressortiront mieux à la lecture de la description et des exemples qui suivent, donnés à titre illustratif et non limitatif de l'invention.

Les expressions « compris entre ... et ... », « allant de ... à ... », « formé de ... à ... », et « variant de ... à ... », doivent se comprendre bornes incluses, sauf mention contraire.

Dans la description et les exemples, sauf indication contraire, les pourcentages sont des pourcentages pondéraux. Les pourcentages sont donc exprimés en masse par rapport à la masse totale de la composition. La température est exprimée en degré Celsius sauf indication contraire, et la pression est la pression atmosphérique, sauf indication contraire.

### Description détaillée

### COMPOSITION AQUEUSE

Comme évoqué précédemment, une composition lubrifiante aqueuse selon l'invention, dite encore lubrifiant aqueux, est une formulation comprenant de l'eau à titre de solvant majoritaire.

Au sens de l'invention, par « solvant majoritaire », on entend signifier que l'eau est présente en plus grande quantité que tout autre solvant éventuellement présent dans la composition. Une composition lubrifiante aqueuse selon l'invention comprend au moins 50 % massique d'eau, en particulier d'eau osmosée, de préférence entre 50 % et 90 % massique, plus préférentiellement entre 60 % et 75 % massique, par rapport à la masse totale de la composition.

Par son rôle de solvant, l'eau permet de solubiliser le ou lesdits polysaccharides, l'huile de ricin et le ou les additifs anti-usure phosphorés et/ou soufrés, ainsi que tout additif optionnellement présent dans la composition, en particulier choisi parmi ceux détaillés dans la suite du texte.

De manière avantageuse, outre son rôle de solvant, l'eau permet d'accéder à une composition lubrifiante présentant de bonnes propriétés de refroidissement, utiles dans le domaine de l'usinage des métaux.

Selon un mode de réalisation particulier, l'eau mise en œuvre dans une composition lubrifiante aqueuse selon l'invention est de l'eau déionisée ou eau osmosée.

Avantageusement, une eau déionisée ne comprend pas d'ions, tels que les ions Ca²⁺ et HCO₃⁻généralement présents dans l'eau, qui sont responsables de la conduction de l'électricité dans l'eau.

La mise en œuvre d'une eau déionisée est donc particulièrement avantageuse dans le cadre de l'utilisation du lubrifiant aqueux selon l'invention pour des applications requérant un fluide conduisant peu, voire pas du tout, l'électricité.

Une composition lubrifiante aqueuse selon l'invention se différencie des lubrifiants hydrocarbonés, qui comprennent une proportion majoritaire d'une ou plusieurs huiles de base non solubles dans l'eau.

Par « huile non soluble dans l'eau », on entend notamment désigner une huile qui ne se dissout substantiellement pas dans l'eau à température ambiante (à environ 25 °C). En particulier, une huile non soluble dans l'eau présente une solubilité dans l'eau inférieure à 0,2 g/L, à température ambiante.

Il s'agit notamment des huiles de bases lubrifiantes appartenant aux groupes I à V selon les classes définies dans la classification API (ou leurs équivalents selon la classification ATIEL) et leurs mélanges.

De préférence, une composition lubrifiante aqueuse selon la présente invention comprend moins de 20 % massique d'huile(s) de base non soluble(s) dans l'eau, de préférence moins de 10 % massique, en particulier moins de 5 % massique, par rapport à la masse totale de la composition.

Avantageusement, une composition lubrifiante aqueuse selon l'invention est totalement exempte d'huile non soluble dans l'eau.

### POLYSACCHARIDE

Comme indiqué précédemment, une composition lubrifiante aqueuse selon l'invention comprend de 0,01 % à 10 % massique d'au moins un polysaccharide.

Il est entendu qu'une composition lubrifiante selon l'invention peut comprendre un unique polysaccharide, ou un mélange d'au moins deux polysaccharides distincts, en particulier tels que décrits ci-après.

Dans le cadre de la présente invention, on entend par « polysaccharides », des polymères constitués de plusieurs oses liés entre eux par des liaisons osidiques. De manière plus préférée, les polysaccharides visés par l'invention sont les celluloses et les galactomannanes, de préférence guars, ainsi que leurs dérivés.

De préférence, les polysaccharides visés par l'invention ont une masse molaire comprise entre 10 et 2000 kg/mol, de préférence comprise entre 100 et 1000 kg/mol.

Le polysaccharide peut être par exemple choisi parmi la cellulose ou l'un de ses dérivés, notamment éthers ou esters de cellulose.

Le polysaccharide peut encore être choisi parmi les polysaccharides à galactomannanes.

Les polysaccharides à galactomannanes sont des polysaccharides hétérogènes constitués d'unités de galactose et de mannose. Ces polyosides non ioniques peuvent être extraits de l'albumen de graines de légumineuses dont ils constituent le glucide de réserve.

Il s'agit plus particulièrement de macromolécules constituées d'une chaîne principale d'unités D-mannopyranose liées en β(1,4), portant des branchements latéraux constitués d'une seule unité D-galactopyranose liée en α(1,6) à la chaîne principale. Les différents galactomannanes se distinguent d'une part par la proportion d'unités α-D-galactopyranose présentes dans le polymère et, d'autre part, par des différences en termes de distribution des unités galactose le long de la chaine de mannose.

Le rapport mannose/galactose (M/G) est de l'ordre de 2 pour la gomme guar, de 3 pour la gomme tara et de 4 pour la gomme de caroube.

Les polysaccharides à galactomannane peuvent plus particulièrement présenter la structure chimique suivante : 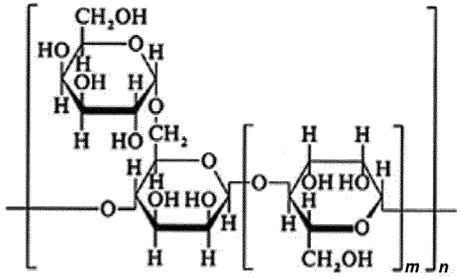 avec, par exemple, m valant 1 (gomme de guar), 2 (gomme de tara) ou 3 (gomme de caroube).

Les polysaccharides à galactomannane peuvent être en particulier choisis parmi la gomme de guar, la gomme de caroube, la gomme tara et leurs dérivés.

Par « dérivés », on entend plus particulièrement des gommes non-ioniques modifiées chimiquement, ou encore des gommes cationiques ou anioniques.

Selon un mode de réalisation particulier, une composition lubrifiante selon l'invention comprend au moins un polysaccharide à galactomannane de type gomme de guar. Par l'expression « de type gomme de guar », on entend désigner la gomme de guar et ses dérivés, en particulier choisis parmi les gommes de guar non-ioniques modifiées chimiquement, les gommes de guar cationiques ou anioniques.

La gomme de guar est caractérisée par un ratio mannose:galactose de l'ordre de 2:1. Le groupement galactose est régulièrement distribué le long de la chaîne de mannose.

Il est entendu qu'une composition lubrifiante selon l'invention peut comprendre un unique polysaccharide à galactomannane, en particulier de type gomme de guar, ou encore un mélange d'au moins deux polysaccharides à galactomannane distincts, par exemple un mélange d'au moins deux polysaccharides à galactomannane choisis parmi la gomme de guar et ses dérivés.

Les polysaccharides à galactomannane de type gomme de guar peuvent être des gommes de guar non ioniques non modifiées ou chimiquement modifiées.

Les gommes de guar non-ioniques modifiées utilisables selon l'invention peuvent être plus particulièrement des gommes de guar modifiées par des groupements hydroxyalkyle en C₁-C₆, parmi lesquels, on peut mentionner à titre d'exemples, les groupements hydroxyméthyle, hydroxyéthyle, hydroxypropyle et hydroxybutyle. A titre d'exemple, une gomme de guar non-ionique, modifiée chimiquement, mise en œuvre dans une composition lubrifiante selon l'invention peut être l'hydroxypropyl guar.

Les polysaccharides à galactomannane, par exemple de type gomme de guar, peuvent également être des galactomannanes cationiques, en particulier présentant une densité de charge cationique inférieure ou égale à 1,5 meq/g et plus particulièrement comprise entre 0,1 et 1 meq/g. La densité de charge peut être déterminée selon la méthode Kjeldahl. Elle correspond en général à un pH de l'ordre de 3 à 9. De manière générale, un polysaccharide à galactomannane cationique comprend des groupements cationiques et/ou des groupements ionisables en groupements cationiques.

Les groupements cationiques préférés sont choisis parmi ceux comportant des groupements amines primaires, secondaires, tertiaires et/ou quaternaires.

Les polysaccharides à galactomannane cationiques ont généralement une masse moléculaire moyenne en poids comprise entre 500 et 5x10⁶ environ, et de préférence comprise entre 10³ et 3x10⁶ environ.

Il peut s'agir par exemple d'un polysaccharide à galactomannane comportant des groupements cationiques trialkyl(C₁- C₄) ammonium. De préférence, 2 % à 30 % en nombre des fonctions hydroxyles du polysaccharide à galactomannane sont porteurs des groupements cationiques trialkylammonium.

Parmi ces groupements trialkylammonium, on peut tout particulièrement citer les groupements triméthylammonium et triéthylammonium.

Encore plus préférentiellement, ces groupements représentent de 5 % à 20 % en poids du poids total du polysaccharide à galactomannane modifié.

Les polysaccharides à galactomannane de type gomme de guar peuvent ainsi être des gommes de guar cationiques, en particulier comportant des groupements hydroxypropyl triméthylammonium. Ils peuvent être par exemple obtenus par réaction de la gomme de guar avec du chlorure de 2,3-époxypropyl triméthylammonium.

A titre d'exemple, une gomme de guar cationique, mise en œuvre dans une composition lubrifiante selon l'invention peut être le chlorure d'hydroxypropyl trimonium de guar.

Les polysaccharides à galactomannane, par exemple de type gomme de guar, peuvent également être des galactomannanes anioniques. En particulier, il peut s'agir de polysaccharides à galactomannane comportant des groupements dérivés d'acide carboxylique, sulfonique, sulfénique, phosphorique, phosphonique ou acide pyruvique. De préférence, le groupement anionique est un groupement acide carboxylique. Le groupement anionique peut également se présenter sous forme d'un sel d'acide, notamment un sel de sodium, de calcium, de lithium ou de potassium.

Les polysaccharides à galactomannane de type gomme de guar peuvent ainsi être des gommes de guar carboxyméthylées, telles qu'une carboxyméthyl guar ou une carboxyméthyl hydroxypropyl guar.

A titre d'exemple, une gomme de guar anionique mise en œuvre dans une composition lubrifiante selon l'invention peut être la carboxyméthyl hydroxypropyl guar.

De préférence, le ou lesdits polysaccharides à galactomannane mis en œuvre dans une composition lubrifiante selon l'invention sont choisis parmi la gomme de guar, les dérivés de gomme de guar, et leurs mélanges, en particulier parmi la gomme de guar, l'hydroxypropyl guar, la carboxyméthyl hydroxypropyl guar, le chlorure d'hydroxypropyltrimonium de guar, et leurs mélanges.

Selon un mode de réalisation particulier, une composition lubrifiante selon l'invention met en œuvre, à titre de polysaccharide à galactomannane, au moins de l'hydroxypropyl guar.

Une composition lubrifiante aqueuse selon l'invention comprend le ou lesdits polysaccharides en une teneur comprise entre 0,01 % et 10 % massique, plus préférentiellement entre 0,1 % et 5 % massique, de manière encore plus préférée entre 0,1 % et 3,5 % massique, en particulier entre 0,2 % et 1 % massique, par rapport à la masse totale la composition.

### HUILE DE RICIN ALCOXYLEE

Comme indiqué précédemment, une composition lubrifiante aqueuse selon l'invention comprend de 0,1 % à 10 % massique d'au moins une huile de ricin alcoxylée, en particulier éthoxylée.

Il est entendu qu'une composition lubrifiante selon l'invention peut comprendre une unique huile de ricin alcoxylée, en particulier éthoxylée, ou un mélange d'au moins deux huiles de ricin alcoxylées particulières distinctes, en particulier telles que décrites ci-dessous.

L'huile de ricin est composée de triglycérides d'acide gras, majoritairement d'acide gras en C₁₆ à C₁₈. Plus particulièrement, la ricinoléine, triglycéride de l'acide ricinoléique (acide gras en C₁₈) est le constituant majeur de l'huile de ricin.

Une huile de ricin alcoxylée est formée de triglycérides alcoxylés.

De préférence, une composition lubrifiante selon l'invention comprend une huile de ricin (C₁-C₄)alcoxylée, de préférence éthoxylée.

Elle peut être obtenue par alcoxylation de l'huile de ricin par un oxyde d'alkylène, en particulier en C₁ à C₄, ou encore par transestérification par un polyalkylène glycol, en particulier un poly(C₁-C₄)alkylène glycol.

De préférence, une composition lubrifiante selon l'invention met en œuvre une huile de ricin éthoxylée. Elle peut être obtenue par éthoxylation de l'huile de ricin par l'oxyde d'éthylène, ou encore par transestérification de l'huile de ricin par un polyéthylène glycol.

Selon un mode de réalisation particulier, une composition lubrifiante selon l'invention met en œuvre une huile de ricin éthoxylée, obtenue par réaction de l'huile de ricin avec l'oxyde d'éthylène, dans un ratio molaire huile de ricin : oxyde d'éthylène compris entre 1 :1 et 1 :100.

Une huile de ricin éthoxylée mise en œuvre dans une composition lubrifiante selon l'invention peut comprendre en particulier au moins 20 groupes oxyéthylène, de préférence de 35 à 45 groupes oxyéthylène.

De préférence, il s'agit d'une huile de ricin éthoxylée obtenue par réaction de l'huile de ricin avec l'oxyde d'éthylène, dans un ratio molaire huile de ricin : oxyde d'éthylène d'environ 1 :35, notée « PEG-35-huile de ricin ».

Comme évoqué précédemment, l'huile de ricin alcoxylée, de préférence éthoxylée, en particulier telle que décrite précédemment, est mise en œuvre à raison de 0,1 % à 10 % massique, par rapport à la masse totale de la composition, en particulier de 1 % à 10 % massique, et plus particulièrement de 2 % à 5 % massique, par rapport à la masse totale de la composition.

### COMPOSE PHOSPHORE ET/OU SOUFRE

Comme indiqué ci-dessus, une composition aqueuse lubrifiante selon l'invention comprend de 0,1 % à 10 % massique d'au moins un composé anti-usure soufré et/ou phosphoré.

Il s'agit plus particulièrement d'un composé anti-usure organophosphoré et/ou organosoufré, de préférence organosoufré.

Par « composé phosphoré » au sens de la présente invention, on entend désigner un additif anti-usure comprenant au moins un atome de phosphore.

Par « composé soufré » au sens de la présente invention, on entend désigner un additif anti-usure comprenant au moins un atome de soufre.

Par « composé phosphosoufré » au sens de la présente invention, on entend désigner un additif anti-usure comprenant au moins un atome de phosphore et au moins un atome de soufre.

Par « composé anti-usure » au sens de la présente invention, on entend désigner un composé présentant des propriétés anti-usure, pouvant notamment être évaluées par un test 4 billes extrême-pression, en particulier selon la norme ASTM D2783. De tels composés sont bien connus de l'homme du métier.

Il est entendu qu'une composition lubrifiante aqueuse selon l'invention peut comprendre un unique composé anti-usure soufré et/ou phosphoré ou un mélange d'au moins deux composés anti-usure soufrés et/ou phosphorés distincts, en particulier tels que définis ci-après.

### Composés phosphorés

Une composition lubrifiante aqueuse selon l'invention peut comprendre au moins un composé phosphoré. En particulier, les composés phosphorés considérés selon l'invention n'apportent pas de soufre.

Le ou lesdits composés phosphorés sont avantageusement mis en œuvre sous une forme soluble ou émulsionnable dans l'eau, en particulier sous la forme de sels ioniques.

En particulier, le composé phosphoré peut être choisi parmi les phosphates d'amine ; les phosphates tels que les esters de phosphate, en particulier les phosphates d'alkyle, d'alcényle ou d'aryle ; les polyphosphates ; les phosphonates tels que les esters de phosphonates, en particulier les phosphonates d'alkyle, d'alcényle ou d'aryle ; les polyphosphonates ; les carbamyl-phosphates ; les phosphinates ; et leurs mélanges.

Le ou les composés phosphorés sont de préférence présents dans une composition lubrifiante aqueuse selon l'invention sous la forme de sels, en particulier sous la forme d'ions phosphate, phosphonate ou phosphinate, neutralisés par un contre-ion approprié.

Les sels peuvent être des sels de métaux alcalins ou alcalino-terreux, d'ammonium, d'alcanolamines, en particulier en C₂-C₈, ou d'alcane amines, en particulier en C₂-C₈, de phosphate, de phosphonate ou de phosphinate.

Des exemples de composés convenant tout particulièrement à l'invention sont les esters de phosphate, les esters de phosphonate et leurs sels, de préférence les esters de phosphate et leurs sels.

Les esters de phosphate, dits encore esters d'acide phosphorique, peuvent être obtenus par réaction d'au moins un alcool, linéaire ou ramifié, éthoxylé ou non, de préférence d'au moins un alcool comportant entre 1 et 12 atomes de carbone, plus préférentiellement entre 2 et 8 atomes de carbone, sur du pentoxyde de phosphore de formule P₂0₅ ou sur l'acide phosphorique.

De préférence, un composé phosphoré mis en œuvre dans une composition aqueuse selon l'invention est choisi parmi les sels d'esters de phosphate, en particulier les sels de métaux alcalins d'esters de phosphate, en particulier d'esters de phosphate d'alkyle ou de dialkyle en C₁-C₈.

Un tel composé peut notamment être choisi parmi le butylphosphate de potassium, le dibutylphosphate de potassium et leurs mélanges.

### Composés soufrés

Selon un autre mode de réalisation particulier, une composition lubrifiante aqueuse selon l'invention peut comprendre au moins un composé soufré, en particulier n'apportant pas de phosphore.

Les composés anti-usure soufrés peuvent être notamment choisis parmi les polysulfures, notamment les oléfines soufrées, les acides gras soufrés, les esters d'acide gras soufré, de préférence mis en œuvre sous leur forme neutralisée, émulsionnable dans l'eau. Avantageusement, une composition lubrifiante aqueuse selon l'invention comprend au moins un composé organosoufré de type acide gras soufré, de préférence sous une forme neutralisée, en particulier par des agents alcalinisant inorganiques ou alcanolamines.

Les acides gras soufrés peuvent comprendre de 8 à 22 atomes de carbone, de préférence de 12 à 18 atomes de carbone.

La quantité de soufre selon la norme ASTM D2622 apportée par le ou lesdits acides gras soufrés peut être comprise entre 5 % et 30 % massique, en particulier entre 10 % et 20 % massique.

De préférence, la quantité de soufre actif à 150°C selon la norme ASTM D 1662 apportée par le ou lesdits acides gras soufrés dans la composition lubrifiante aqueuse selon l'invention est supérieure ou égale à 2 % massique, en particulier compris entre 5 et 10 % massique, par rapport à la masse totale de la composition lubrifiante.

On entend « par soufre actif » au sens de la présente invention, le soufre qu'un composé chimique est capable de céder ou de libérer lorsqu'on place ce composé dans les conditions de la norme ASTM D1662. La norme ASTM D-1662 définit un taux de soufre actif d'un composé à une température donnée comme une différence exprimée en pourcentage pondéral de teneur en soufre avant et après réaction d'un échantillon de ce composés soufré avec une quantité donnée de cuivre pendant un temps fixe.

La quantité de soufre actif à 150°C (norme ASTM D1662) dans la composition lubrifiante aqueuse de l'invention peut influer sur ses performances en extrême-pression. Cette quantité de soufre actif à 150°C (ASTM D1662) dans la composition lubrifiante ne doit pas être trop basse, sinon on ne peut obtenir un comportement extrême-pression satisfaisant. Elle ne doit pas être trop élevée, pour éviter un risque de corrosion, notamment vis-à-vis des métaux et alliages métalliques, notamment vis-à-vis du cuivre.

Comme évoqué précédemment, le ou lesdits acides gras soufrés sont de préférence mis en œuvre dans une composition lubrifiante aqueuse selon l'invention sous leur forme neutralisée par un agent alcalinisant, tel que l'hydroxyde sodium, l'hydroxyde de potassium, ou une alcanolamine, telles que la monoéthanolamine, la triéthanolamine, la monoisopropanolamine, la diisopropanolamine et la triisopropanolamine.

### Composés phosphosoufrés

Des exemples de composés phosphosoufrés convenant à l'invention sont plus particulièrement les thiophosphates, notamment les alkylthiophosphates métalliques, les thiophosphites, incluant les acides thiophosphoriques et thiophosphoreux, les esters de ces acides, leurs sels, les dithiophosphites et dithiophosphates.

On peut citer, à titre d'exemples de tels composés, les dithiophosphates d'amine, les monobutylthiophosphate, monooctylthiophosphate, monolaurylthiophosphate, dibutylthiophosphate, dilaurylthiophosphate, tributylthiophosphate, trioctylthiophosphate, triphenylthiophosphate, trilaurylthiophosphate, monobutylthiophosphite, monooctylthiophosphite, monolaurylthiophosphite, di butylthiophosphite, dilaurylthiophosphite, tributylthiophosphite, trioctylthiophosphite, triphenylthiophosphite, trilaurylthiophosphite et leurs sels.

Des exemples de sels des esters de l'acide thiophosphorique et de l'acide thiophosphoreux sont ceux obtenus par réaction avec un composé azoté tels que l'ammoniac ou une amine ou l'oxyde de zinc ou le chlorure de zinc.

De préférence, une composition lubrifiante selon l'invention met en œuvre un ou plusieurs composés anti-usures soufrés ou phosphorés, de préférence soufrés, en particulier tels que définis ci-dessus et plus particulièrement choisis parmi les acides gras soufrés comprenant de 8 à 22 atomes de carbone, de préférence de 12 à 18 atomes de carbone, de préférence sous une forme neutralisée, notamment par des agents alcalinisant inorganiques ou alcanolamines.

Le ou lesdits composés anti-usure soufrés et/ou phosphorés, de préférence soufrés, sont mis en œuvre dans une composition lubrifiante aqueuse selon l'invention à raison de 0,1 % à 10 % massique, de préférence de 0,1 % à 5,0 % massique, plus préférentiellement de 0,5 % à 3,0 % massique, par rapport à la masse totale de composition.

Selon un mode de réalisation particulier, une composition lubrifiante selon l'invention peut comprendre le ou lesdits anti-usures soufrés et/ou phosphorés, de préférence soufrés, et une ou plusieurs huiles de ricin, de préférence une huile de ricin éthoxylée, dans un rapport massique anti-usure(s) :huile(s) de ricin compris entre 1 :1 et 10 :1 en particulier d'environ 1 :1.

### AUTRES COMPOSES

### Polyalkylène glycol

Comme indiqué précédemment, une composition lubrifiante aqueuse selon l'invention comprend de préférence en outre au moins un polyalkylène glycol.

Les polyalkylène glycols (notés « PAG ») sont des homo- ou co-polymères constitués d'unités oxydes d'alkylène.

Ils sont en particulier choisis parmi les polyalkylène glycols solubles dans l'eau.

Par « soluble dans l'eau » on entend désigner un polyalkylène glycol ayant une solubilité dans l'eau d'au moins 10 g/L, de préférence d'au moins 500 g/L, dans l'eau à température ambiante (environ 25 °C).

Les polyalkylène glycols peuvent être plus particulièrement formés d'unités oxyde d'alkylène en C₁-C₄, de préférence en C₁-C₃, plus particulièrement en C₂-C₃.

Avantageusement, un polyalkylène glycol mis en œuvre dans une composition lubrifiante aqueuse selon l'invention comprend au moins 50 % massique d'unités oxyde de propylène et/ou oxyde d'éthylène.

Il peut s'agir d'un copolymère, en particulier statistique, comprenant des unités oxyde d'éthylène, oxyde de propylène et/ou oxyde de butylène. De préférence, il peut s'agir d'un copolymère, en particulier statistique, oxyde d'éthylène/oxyde de propylène.

De préférence, un polyalkylène glycol mis en œuvre dans une composition lubrifiante aqueuse selon l'invention présente une masse molaire moyenne massique (Mn) comprise entre 100 et 25 000 g.mol⁻¹, de préférence entre 5 000 et 21 000 g.mol⁻¹.

La masse molaire moyenne en nombre peut être mesurée par chromatographie à perméation de gel (GPC).

De préférence, un polyalkylène glycol mis en œuvre dans une composition lubrifiante aqueuse selon l'invention présente une viscosité cinématique mesurée à 100 °C (KV100), selon la norme ASTM D445, comprise entre 100 et 5 000 mm²/s, en particulier entre 150 et 3 000 mm²/s, par exemple entre 1500 et 3 000 mm²/s ou entre 100 et 250 mm²/s.

De préférence, un polyalkylène glycol mis en œuvre dans une composition lubrifiante aqueuse selon l'invention présente une viscosité cinématique mesurée à 40°C (KV40), selon la norme ASTM D445, comprise entre 500 et 30 000 mm²/s, plus particulièrement entre 1 000 et 25 000 mm²/s, par exemple entre 10 000 et 25 000 mm²/s ou entre 500 et 2 500 mm²/.

Le point éclair d'un polyalkylène glycol mis en œuvre dans une composition lubrifiante aqueuse selon l'invention est de préférence supérieur ou égale à 160 °C, en particulier supérieur ou égale à 220 °C, par exemple compris entre 220 °C et 300 °C. Le point éclair peut être mesuré par la norme ISO 2592 ou ASTM D92.

De préférence, un polyalkylène glycol mis en œuvre dans une composition lubrifiante aqueuse selon l'invention présente un indice de viscosité mesuré selon la norme ASTM D2270, compris entre 100 et 800, de préférence entre 250 et 550.

De tels polyalkylène glycols peuvent être disponibles dans le commerce ou synthétisés selon des méthodes connues de l'homme du métier. Ils peuvent être obtenus par exemple par polymérisation ou copolymérisation d'oxydes d'alkylène ayant entre 2 et 4 atomes de carbones. Un exemple de synthèse est par exemple détaillé dans le document US 2012/0108482, par réaction entre un ou plusieurs alcools ayant entre 2 et 12 atomes de carbone, en particulier des polyols, tels que des diols, avec des oxydes d'alkylène, en particulier oxyde d'éthylène, oxyde de propylène et/ou oxyde de butylène. L'alcool peut être de préférence un diol, en particulier le 1,2-propanediol.

En particulier, le ou lesdits composés polyalkylène glycol peuvent être mis en œuvre dans une composition lubrifiante aqueuse selon l'invention en une teneur comprise entre 0,001 % et 80 % massique, de préférence entre 0,1 % et 15 % massique, plus préférentiellement entre 1 % et 10 % massique, en particulier entre 2 % et 5 % massique, par rapport à la masse totale la composition.

### Additifs

Une composition lubrifiante aqueuse selon l'invention peut comprendre en outre divers additifs.

Il est entendu que le ou lesdits additifs sont compatibles avec leur mise en œuvre en milieu aqueux. Avantageusement, les additifs sont mis en œuvre sous une forme soluble ou émulsionnable dans l'eau, par exemple sous la forme de sels ou de liquides ioniques.

Le ou lesdits additifs sont bien entendu choisis au regard de l'application visée pour le lubrifiant aqueux.

Bien entendu, l'homme du métier veillera à choisir les éventuels additifs et/ou leur quantité de telle manière que les propriétés avantageuses de la composition lubrifiante aqueuse selon l'invention, en particulier l'effet avantageux d'amélioration des propriétés tribologiques, notamment des propriétés extrême-pression et protection des pièces contre l'usure, ne soient pas altérées par l'adjonction envisagée.

De tels additifs peuvent être plus particulièrement choisis parmi des agents anti-mousses, des biocides, des régulateurs de pH, des inhibiteurs de corrosion, des additifs anti-usure et/ou extrême-pression autres que les composés soufrés et/ou phosphorés précités, des agents séquestrant, des agents passivant les métaux, des colorants, des dispersants, des agents émulsifiants, des agents mouillant, et leurs mélanges.

Avantageusement, une composition lubrifiante aqueuse selon l'invention peut comprendre un ou plusieurs additifs choisis parmi des agents anti-mousses, des biocides, des régulateurs de pH, des inhibiteurs de corrosion, des agents séquestrant, des agents passivant les métaux, des agents émulsifiants et leurs mélanges.

Une composition lubrifiante aqueuse selon l'invention peut comprendre plus particulièrement de 1 à 50 % massique d'additifs, en particulier de 5 à 40 % massique d'additifs, par rapport à la masse totale de la composition.

### Inhibiteur de corrosion

Une composition lubrifiante aqueuse selon l'invention peut comprendre au moins un agent inhibiteur de corrosion. Les inhibiteurs de corrosion permettent avantageusement de réduire voire d'empêcher la corrosion des pièces métalliques. La nature du ou desdits inhibiteurs de corrosion peut être choisie au regard du métal à protéger contre la corrosion, tel que l'aluminium, l'acier, l'acier galvanisé, les métaux jaunes, par exemple le cuivre ou le laiton. Parmi les inhibiteurs de corrosion inorganiques peuvent être cités les nitrites, les sulfites, les silicates, les borates, les phosphates de sodium, potassium, calcium ou magnésium, les phosphates de métaux alcalins, les hydroxydes, les molybdates, les sulfates de zinc, de magnésium ou de nickel.

Parmi les inhibiteurs de corrosion organiques peuvent être cités les acides aliphatiques monocarboxyliques, en particulier ayant de 4 à 15 atomes de carbone, par exemple l'acide octanoïque, les acides aliphatiques dicarboxyliques ayant de 4 à 15 atomes de carbone, par exemple l'acide décane dioïque (acide sébacique), l'acide undécane dioïque, l'acide dodécane dioïque, l'acide isononanoïque ou leurs mélanges, les acides polycarboxyliques éventuellement neutralisés par la triéthanolamine, tel que l'acide 1,3,5-triazine-2,4,6-tri-(6-aminocaproïque), les acides alcanoylamidocarboxyliques, en particulier l'acide isononanoylamidocaproïque, l' Acide 6-[[(4-méthylphényl)sulfonyl]amino]hexanoïque, et leurs mélanges. Les amides boratés, produits de la réaction d'amines ou d'amino-alcools avec de l'acide borique, peuvent également être utilisés.

Une composition lubrifiante aqueuse selon l'invention peut notamment comprendre de 0,01 % à 15 % massique d'inhibiteur(s) de corrosion, de préférence de 1,0 % à 13 % massique, par rapport à la masse totale de la composition.

### Anti-mousse

Une composition lubrifiante aqueuse selon l'invention peut comprendre au moins un additif anti-mousse. Les antimousses permettent d'empêcher le moussage du fluide lubrifiant.

Il peut s'agir par exemple d'un agent anti-mousse à base de polysiloxanes ou de polymères acrylates. De préférence, l'agent anti-mousse est choisi parmi les siloxanes tridimensionnelles.

Également, les agents anti-mousses peuvent être des polymères polaires tels que les polyméthylsiloxanes ou les polyacrylates.

En particulier, une composition lubrifiante aqueuse selon l'invention peut comprendre de 0,001 % à 3,0 % massique d'additif(s) anti-mousse, de préférence de 0,005 % à 1,5 % massique, par rapport à la masse totale de la composition lubrifiante.

### Régulateur de pH

Une composition lubrifiante aqueuse selon l'invention peut comprendre au moins un additif régulateur de pH, en particulier un tampon alcalin. Le régulateur de pH permet de maintenir le pH souhaité de la composition lubrifiante, en particulier afin de préserver un pH alcalin, avantageusement compris entre 8 et 11, de manière notamment à prévenir une corrosion des surfaces métalliques.

Le régulateur de pH peut être choisi dans la famille des amines, en particulier des alcanolamines et des alcools aminés.

Il peut s'agir notamment d'un additif régulateur de pH choisi parmi les éthanolamines, telles que la monoéthanolamine (MEA), la diéthanolamine (DEA) ; la triéthanolamine (TEA), la diglycolamine (DGA) les isopropanolamines, telles que la mono-isopropanolamine (MIPA), la diisopropanolamine (DIPA) et la triisopropanolamine (TIPA), les éthylène amines, telles que l'éthylène diamine (EDA), la diéthylène triamine (DETA), la triéthylène tétramine (TETA) et la tétraéthylène pentamine (TEPA), les alcanolamines, telle que la méthyldiéthanol amine (MDEA), les cyclamines, tels que la cyclohexylamine, le 2-amino-2-éthyle-1,3-propanediol, le 2-amino-2-méthyle-1-propanol et leurs mélanges.

Une composition lubrifiante aqueuse selon l'invention peut notamment comprendre de 1 % à 25 % massique d'additif(s) régulateur(s) de pH, de préférence de 5 % à 20 % massique, par rapport à la masse totale de la composition.

### Agents passivant les métaux

Une composition lubrifiante aqueuse selon l'invention peut comprendre au moins un agent passivant les métaux. Les agents passivant les métaux permettent de protéger les pièces métalliques en favorisant la formation d'oxyde métallique à leur surface.

Les agents passivant les métaux peuvent être par exemple choisis parmi des dérivés du triazole, tels que le tétrahydrobenzotriazole (THBTZ), le tolyltryazole (TTZ), le benzotriazole (BTZ), les amines substituées par un groupe triazole, tels que la N,N-bis(2-éthylhexyl)-1,2,4-triazol-1-yl méthanamine, la N'-bis(2 éthylhexyl)-4-méthyl-1H-benzotriazol-1-méthyl-amine, la N,N-bis(heptyl)-ar-methyl-1H-benzotriazole-1-méthanamine, N,N-bis(nonyl)-ar-methyl-1H-benzotriazole-1-méthanamine, N,N-bis(décyl)-ar-méthyl-1H-benzotriazole-1-méthanamine, N,N-bis(undécyl)-ar-méthyl-1H-benzotriazole-1-méthanamine, N,N-bis(dodécyl)-ar-méthyl-1H-benzotriazole-1-méthanamine, N,N-bis(2-éthylhexyl)-ar-méthyl-1H-benzotriazole-1-méthanamine, les 1,2,4-triazoles, les benzimidazoles, les 2-alkyldithiobenzimidazoles, les 2-alkyldithiobenzothiazoles, les 2-(N, N-dialkyldithiocarbamoyl)benzothiazoles, les 2,5-bis(alkyldithio)-1,3,4-thiadiazoles, tels que le 2,5-bis(tert-octyldithio)-1,3,4-thiadiazole, le 2,5-bis(tert-nonyldithio)-1,3,4-thiadiazole, le 2,5-bis(tert-decyldithio)-1,3,4-thiadiazole, le 2,5-bis(tert-undecyldithio)-1,3,4-thiadiazole, le 2,5-bis(tert-dodecyldithio)-1,3,4-thiadiazole, le 2,5-bis(tert-tridecyldithio)-1,3,4-thiadiazole, le 2,5-bis(tert-tetradecyldithio)-1,3,4-thiadiazole, le 2,5-bis(tert-pentadecyldithio)-1,3,4-thiadiazole, le 2,5-bis(tert-hexadecyldithio)-1,3,4-thiadiazole, le 2,5-bis(tert-heptadecyldithio)-1,3,4-thiadiazole, le 2,5-bis(tert-octadecyldithio)-1,3,4-thiadiazole, le 2,5-bis(tert-nonadecyldithio)-1,3,4-thiadiazole, le 2,5-bis(tert-eicosyldithio)-1,3,4-thiadiazole, les 2,5-bis(N,N-dialkyldithiocarbamoyl)-1,3,4-thiadiazoles, les 2-alkyldithio-5-mercaptothiadiazoles, et leurs mélanges.

De préférence les agents passivant les métaux sont choisis parmi le tétrahydrobenzotriazole (THBTZ), le tolyltriazole (TTZ), le benzotriazole (BTZ), et leurs sels, pris seuls ou en mélanges.

Une composition lubrifiante aqueuse selon l'invention peut notamment comprendre de 0,01 % à 2,0 % massique d'agent(s) passivant les métaux, de préférence de 0,1 % à 1,0 % massique, plus préférentiellement de 0,2 % à 0,8 % massique, par rapport à la masse totale de la composition.

### Colorants

Une composition lubrifiante aqueuse selon l'invention peut comprendre un ou plusieurs colorants. Les colorants peuvent être naturels ou synthétiques, généralement organiques. Les colorants pouvant être mis en œuvre dans une composition lubrifiante aqueuse peuvent être plus particulièrement choisis parmi des colorants hydrosolubles naturels ou synthétiques, par exemple les colorants FDC Red 4, DC Red 6, DC Red 22, DC Red 28, DC Red 30, DC Red 33, DC Orange 4, DC Yellow 5, DC Yellow 6, DC Yellow 8, FDC Green 3, DC Green 5, FDC Blue 1, la bétanine (betterave), le carmin, une chlorophylline, le bleu de méthylène, les anthocyanes (enocianine, carotte noire et hibiscus), le caramel et la riboflavine.

Une composition lubrifiante aqueuse selon l'invention peut comprendre entre 0,01 % et 2,0 % massique de colorant(s), de préférence entre 0,01 % et 1,5 % massique, plus préférentiellement entre 0,02 % et 1,0 % massique, par rapport à la masse totale de la composition.

### Agents émulsifiants

Une composition lubrifiante aqueuse selon l'invention peut comprendre un ou plusieurs agents émulsifiants, également appelés émulgateurs. Leur fonction est de générer des émulsions stables dans l'eau.

Les agents émulsifiants peuvent être plus particulièrement non ioniques, comme par exemple des alcools gras éthoxylés, des acides gras éthoxylés, les composés issus de la réaction entre l'oxyde de propylène, l'éthylènediamine et éventuellement l'oxyde d'éthylène des amides gras éthoxylés ; anioniques, par exemple des savons de KOH, de NaOH ; des sulphonates ; cationiques, tels que des composés ammonium quaternaire ; ou encore des esters d'acide carboxylique solubles ou émulsionnables dans l'eau.

En particulier, une composition lubrifiante aqueuse selon l'invention peut comprendre de 0,01 % à 10 % massique d'agent(s) émulsifiant, de préférence de 0,1 % à 5,0 % massique, par rapport à la masse totale de la composition lubrifiante.

### Agents séquestrant

Une composition lubrifiante aqueuse selon l'invention peut comprendre au moins un agent séquestrant. Les agents séquestrant, encore appelés agents chélatant, permettent de limiter l'incrustation d'ion métalliques dans la composition.

A titre d'exemples d'agents séquestrant, on peut citer ceux dérivés d'acides phosphoniques et des phosphonates, tels que l'acide diéthylènetriaminepentaméthyle phosphonique (DTPMPA), l'acide amino tri(méthylène phosphonique) (ATMP), l'acide hydroxyéthane-diphosphonique (HEDP), le 1,1-diphosphonate de 1-hydroxyléthylidène, l'acide de 2-hydroxyéthylamine di(méthylène phosphonique) (HEAMBP), l'acide diéthylène triamino penta(méthylène phosphonique) (DTMP), les acides organiques multifonctionnels et les acide hydroxylés, tels que l'acide éthylène diamine tétra-acétique (EDTA), l'acide pteroyl-L-glutamique (PGLU), les polyacides organiques, tels que l'acide maléique et l'acide polyaspartique et les carbohydrates, tels que l'inuline, la carboxyméthylinuline et le carboxyméthylchitosane.

Une composition lubrifiante aqueuse selon l'invention peut comprendre de 0,001% à 2,0 % massique d'agent(s) séquestrant(s), de préférence de 0,01 % à 1,0 % massique, par rapport à la masse totale de la composition.

### Biocides

Une composition lubrifiante aqueuse selon l'invention peut comprendre au moins un agent biocide à action bactéricide et/ou fongicide. Les biocides peuvent être utilisés pour améliorer la stabilité biologique de la composition en limitant la prolifération des bactéries, champignons et levures dans le fluide lubrifiant.

De tels biocides peuvent être choisis parmi les parabènes, les aldéhydes, les composés acétylacétone réactifs, les isothiazolinones, les composés phénoliques, les sels d'acides, les composés halogénés, les ammoniums quaternaires, certains alcools et leurs mélanges.

De préférence, les biocides peuvent être choisis parmi les benzisothiazolinones (BIT) éventuellement substituées, telle que la N-butyl-1,2-benzisothiazolin-3-one, les méthylisothiazolinones (MIT), les mélanges de méthylisothiazolinone et de chlorométhylisothiazolinone (MIT/CMIT), l'orthophényl-phénol (OPP) ou son sel de sodium, le 3-iodo-2-propynylbutylcarbamate (IPBC), le chloro-crésol et la N,N-méthylène-bis-morpholine (MBM) ; l'acide sorbique ; de préférence parmi l'orthophényl-phénol (OPP) ou son sel sodium, le 3-iodo-2-propynylbutylcarbamate, le chloro-cresol, les benzisothiazolinones et la N,N-méthylène-isomorpholine.

Une composition lubrifiante aqueuse selon l'invention peut notamment comprendre entre 0,01 % et 10 % massique de biocide(s), de préférence entre 0,1 % et 5,0 % massique, par rapport à la masse totale de la composition.

Selon un mode de réalisation particulier, une composition lubrifiante aqueuse selon l'invention comprend :
- au moins 50 % massique d'eau, de préférence d'eau osmosée ;
- de 0,01 % à 10 % massique d'au moins un polysaccharide, en particulier tel que défini précédemment, notamment un polysaccharide à galactomannane et plus particulièrement de type gomme du guar ;
- de 0,1 % à 10 % massique d'au moins une huile de ricin alcoxylée, en particulier éthoxylée ;
- de 0,1 % à 10 % massique d'au moins un composé anti-usure phosphoré et/ou soufré, en particulier soufré ; et
- éventuellement de 1 % à 50 % massique, en particulier de 5 à 40 % massique, d'un ou plusieurs additifs choisis parmi des agents anti-mousses, des biocides, des régulateurs de pH, des inhibiteurs de corrosion, des agents séquestrant, des agents passivant les métaux, des agents émulsifiants, et leurs mélanges,
les teneurs étant exprimées par rapport à la masse totale de la composition lubrifiante.

De préférence, une composition lubrifiante aqueuse selon l'invention comprend :
- au moins 50 % massique d'eau, de préférence d'eau osmosée ;
- de 0,01 % à 10 % massique d'au moins un polysaccharide, en particulier tel que défini précédemment, notamment un polysaccharide à galactomannane et plus particulièrement de type gomme du guar ;
- de 0,1 % à 10 % massique d'au moins une huile de ricin alcoxylée, en particulier éthoxylée ;
- de 0,1 % à 10 % massique d'au moins un composé anti-usure phosphoré et/ou soufré, en particulier soufré ;
- de 0,001 % à 30 % massique, de préférence de 0,1 % à 15 % massique, d'au moins un polyalkylène glycol, en particulier tel que défini précédemment ; et
- éventuellement de 1 % à 50 % massique, en particulier de 5 à 40 % massique, d'un ou plusieurs additifs choisis parmi des agents anti-mousses, des biocides, des régulateurs de pH, des inhibiteurs de corrosion, des agents séquestrant, des agents passivant les métaux, des agents émulsifiants, et leurs mélanges,
les teneurs étant exprimées par rapport à la masse totale de la composition lubrifiante.

En particulier, une composition lubrifiante aqueuse selon l'invention peut consister en :
- de 0,01 % à 10 % massique d'au moins un polysaccharide, en particulier tel que défini précédemment, notamment un polysaccharide à galactomannane et plus particulièrement de type gomme du guar ;
- de 0,1 % à 10 % massique d'au moins une huile de ricin alcoxylée, en particulier éthoxylée ;
- de 0,1 % à 10 % massique d'au moins un composé anti-usure phosphoré et/ou soufré, en particulier soufré ;
- de 0,001 % à 30 % massique d'au moins un polyalkylène glycol, de préférence de 0,1 % à 15 % massique, en particulier tel que défini précédemment ; et
- éventuellement de 1 % à 50 % massique, en particulier de 5 à 40 % massique, d'un ou plusieurs additifs choisis parmi des agents anti-mousses, des biocides, des régulateurs de pH, des inhibiteurs de corrosion, des agents séquestrant, des agents passivant les métaux, des agents émulsifiants, et leurs mélanges,
les teneurs étant exprimées par rapport à la masse totale de la composition lubrifiante, et le reste étant constitué d'eau, de préférence d'eau osmosée.

Selon l'invention, les caractéristiques particulières, avantageuses ou préférées de la composition selon l'invention, permettent de définir des utilisations selon l'invention qui sont également particulières, avantageuses ou préférées.

L'invention va maintenant être décrite au moyen des exemples suivants donnés bien entendu à titre illustratif et non limitatif de l'invention.

### Exemple

### Mesure des propriétés tribologiques

Les propriétés extrême-pression et anti-usure des compositions lubrifiantes sont évaluées par le test 4 billes selon la norme ASTM D2783 adaptée avec les paramètres suivants :
- vitesse proche de 1500 tours/minute,
- température ambiante, soit environ 20°C,
- durée de charge de 1 minute.

La mesure d'extrême-pression est réalisée par rotation d'une bille en acier inoxydable sur trois billes également en acier inoxydable maintenues immobiles, les 4 billes étant entièrement recouvertes d'un film de lubrifiant. Une charge est appliquée sur les billes et augmentée graduellement (toutes les minutes selon les paramètres ci-dessus) jusqu'à ce que les billes se soudent entre elles. Les billes sont changées avant chaque augmentation de la charge.

Le pouvoir extrême-pression correspond à la valeur de la charge à partir de laquelle les 4 billes se soudent, empêchant la rotation de la bille supérieure sur les 3 autres. Plus la charge est importante, plus le pouvoir extrême-pression est élevé.

Cette méthode permet également d'évaluer les propriétés anti-usure d'une composition lubrifiante. Pendant l'augmentation graduelle de charge, il est possible de déterminer, à chaque pallier, le diamètre d'usure sur les 3 billes. Plus le diamètre d'usure est faible, plus le lubrifiant est efficace pour prévenir l'usure (ou grippage) des pièces.

Les valeurs de diamètre d'usure fournies dans les exemples qui suivent sont celles obtenues pour la valeur de charge précédent la soudure des billes.

Il est courant de diluer les compositions avant la réalisation des essais de charge, et le taux de dilution est donc précisé dans les résultats ci-dessous.

### Exemple 1 : Préparation des compositions lubrifiantes

Une composition lubrifiante aqueuse selon l'invention **(I1),** et trois compositions lubrifiantes aqueuses comparatives, **C1** ne comprenant pas de composé phosphoré et/ou soufré, **C2** ne comprenant pas d'huile de ricin alcoxylée, **C3** ne comprenant ni huile de ricin alcoxylée ni composé phosphoré et/ou soufré, ont été formulées selon le protocole ci-dessous, dans les pourcentages massiques indiqués dans le tableau 1 suivant.

Le protocole de formulation est le suivant :
Le polysaccharide et éventuellement l'huile de ricin alcoxylée sont solubilisés dans l'eau osmosée. La solution est agitée pendant 30 minutes à température ambiante (avoisinant les 20°C).

Puis, les autres composants sont ajoutés comme suit : introduction du ou des additifs régulateurs de pH, puis du ou des additifs inhibiteurs de corrosion en chauffant le mélange à une température de 40 à 50 °C. La solution est agitée à l'aide d'un barreau aimanté pendant une durée allant de 1 heure à 1 heure 30. Les composés suivants sont ensuite ajoutés, séquentiellement toutes les 5 minutes, dans l'ordre suivant et toujours sous agitation : passivateur(s), agent(s) séquestrant, PAG, le ou les additifs anti-usure puis éventuellement agent(s) mouillant, agent(s) antimousse et biocide(s).

Enfin, on procède à une agitation finale d'une durée de 1 heure.

**[Tableau 1]**

| Composition | **I1 selon l'invention** | **C1 hors invention** | **C2 hors invention** | **C3 hors invention** |
|---|---|---|---|---|
| Eau osmosée [%] | 63,01 | 65,01 | 65,01 | 67,01 |
| Polysaccharide 1 [%] (Hydroxyethyl cellulose) | 0,40 | 0,40 | 0,40 | 0,40 |
| Huile de ricin éthoxylée [%] (PEG-35 huile de ricin) | 2 | 2 | - | - |
| Anti-usure soufré [%] (Acide gras soufré) | 2 | - | 2 | - |
| Additif(s)⁽¹⁾ | 32,59 | 32,59 | 32,59 | 32,59 |

| | | | | |
|---|---|---|---|---|
| ⁽¹⁾ Le ou les additifs sont choisis parmi les anti-corrosion, les passivateurs, les agents séquestrants, les régulateurs de pH, les anti-mousse et les biocides. | | | | |

### Exemple 2 : Caractérisation des compositions selon l'invention et comparative

Les propriétés tribologiques ont été mesurées pour chaque composition, comme détaillé dans le protocole ci-dessus.

Les résultats sont compilés dans le tableau 2 ci-dessous.

**[Tableau 2]**

| Composition | Taux de dilution [%] | Charge de soudure [kg] | Diamètre d'usure [mm] |
|---|---|---|---|
| I1 (invention) | 12 | 260 | 1,5 - 1,6 |
| C1 (comparative) | 12 | 220 | 1,6 - 1,7 |
| C2 (comparative) | 12 | 200 | 1,5 - 1,6 |
| C3 (comparative) | 12 | 180 | 1,7 - 1,8 |

La composition I1 selon l'invention présente une charge à la soudure significativement supérieure à celle obtenue pour les compositions comparatives C1 à C3 et un diamètre d'usure équivalent, voire inférieur.

Ainsi, les compositions lubrifiantes conformes à l'invention, incorporant une association d'au moins un composé anti-usure phosphoré et/ou soufré et d'une huile de ricin alcoxylée, en particulier éthoxylée, présentent des propriétés extrême-pression significativement améliorées, comparativement à des compositions ne comprenant pas l'un ou l'autre de ces composés.

### Exemple 3 : Préparation des compositions lubrifiantes

Une composition lubrifiante aqueuse selon l'invention (I2), et trois compositions lubrifiantes aqueuses comparatives, **C4** ne comprenant pas de composé phosphoré et/ou soufré, **C5** ne comprenant pas d'huile de ricin alcoxylée, **C6** ne comprenant ni huile de ricin alcoxylée ni composé phosphoré et/ou soufré, ont été formulées selon le même protocole de formulation que décrit à l'exemple 1, avec les pourcentages massiques indiqués dans le tableau 3 suivant.

**[Tableau 3]**

| Composition | **I2 selon l'invention** | **C4 hors invention** | **C5 hors invention** | **C6 hors invention** |
|---|---|---|---|---|
| Eau osmosée [%] | 63,61 | 65,61 | 65,61 | 67,61 |
| Polysaccharide 2 [%] (Hydroxypropyl Guar) | 0,40 | 0,40 | 0,40 | 0,40 |
| Huile de ricin éthoxylée [%] (PEG-35 huile de ricin) | 2 | 2 | - | - |
| Composé soufré [%] (Acide gras soufré) | 2 | - | 2 | - |
| Additif(s)⁽¹⁾ | 31,99 | 31,99 | 31,99 | 31,99 |

| | | | | |
|---|---|---|---|---|
| ⁽¹⁾ Le ou les additifs sont choisis parmi les anti-corrosion, les passivateurs, les agents séquestrants, les régulateurs de pH, les anti-mousse et les biocides. | | | | |

### Exemple 4 : Caractérisation des compositions selon l'invention et comparative

Les propriétés tribologiques ont été mesurées pour chaque composition, comme détaillé dans le protocole ci-dessus.

Les résultats sont compilés dans le tableau 4 ci-dessous.

**[Tableau 4]**

| Composition | Taux de dilution [%] | Charge de soudure [kg] | Diamètre d'usure [mm] |
|---|---|---|---|
| I2 (invention) | 12 | 220 | 1,4 - 1,5 |
| C4 (comparative) | 12 | 180 | 1,7 - 1,8 |
| C5 (comparative) | 12 | 220 | 1,6 - 1,7 |
| C6 (comparative) | 12 | 180 | 1,6 - 1,7 |

La composition I2 selon l'invention présente une charge à la soudure équivalente, voire supérieure, à celles obtenues pour les compositions comparatives C4 à C6 et un diamètre d'usure inférieur dans des conditions extrême-pression.

Ainsi, les compositions lubrifiantes conformes à l'invention, incorporant une association d'au moins un composé anti-usure phosphoré et/ou soufré et d'une huile de ricin alcoxylée, en particulier éthoxylée, présentent des propriétés extrême-pression significativement améliorées, comparativement à des compositions ne comprenant pas l'un ou l'autre de ces composés.

## Revendications

1. Composition lubrifiante aqueuse, en particulier pour le travail des métaux, comprenant au moins :
- au moins 50 % massique d'eau, de préférence d'eau osmosée ;
- de 0,01 % à 10 % massique d'au moins un polysaccharide ;
- de 0,1 % à 10 % massique d'au moins une huile de ricin alcoxylée, en particulier éthoxylée ; et
- de 0,1 % à 10 % massique d'au moins un composé anti-usure soufré et/ou phosphoré,
les pourcentages étant exprimés par rapport à la masse totale de la composition.

2. Composition lubrifiante aqueuse selon la revendication 1, comprenant entre 50 % et 90 % massique d'eau, en particulier d'eau osmosée, de préférence entre 60 % et 75 % massique, par rapport à la masse totale de la composition.

3. Composition lubrifiante aqueuse selon la revendication 1 ou 2, dans laquelle l'huile de ricin alcoxylée est une huile de ricin éthoxylée, obtenue par réaction de l'huile de ricin avec l'oxyde d'éthylène, dans un ratio molaire huile de ricin : oxyde d'éthylène compris entre 1 :1 et 1 :100 et en particulier de 1 :35.

4. Composition lubrifiante aqueuse selon l'une quelconque des revendications précédentes, comprenant de 1 % à 10 % massique d'huile(s) de ricin alcoxylée, plus particulièrement de 2 % à 5 % massique, par rapport à la masse totale la composition.

5. Composition lubrifiante aqueuse selon l'une quelconque des revendications précédentes, comprenant de 0,1 % à 5 % massique de polysaccharide(s), notamment de 0,1 % à 3,5 % massique et plus particulièrement de 0,2 % à 1 % massique, par rapport à la masse totale la composition.

6. Composition lubrifiante aqueuse selon l'une quelconque des revendications précédentes, dans laquelle le ou lesdits composés anti-usure soufrés et/ou phosphorés sont choisis parmi les composés organosoufrés de type acide gras soufré comprenant de 8 à 22 atomes de carbone, de préférence de 12 à 18 atomes de carbone, de préférence sous une forme neutralisée, en particulier par des agents alcalinisant inorganiques ou alcanolamines.

7. Composition lubrifiante aqueuse selon l'une quelconque des revendications précédentes, comprenant de 0,1 % à 5 % massique de composé(s) anti-usure phosphoré(s) et/ou soufré(s), de préférence soufré(s), plus particulièrement de 0,5 % à 3,0 % massique, par rapport à la masse totale la composition.

8. Composition lubrifiante aqueuse selon l'une quelconque des revendications précédentes, ladite composition comprenant en outre au moins un polyalkylène glycol, en particulier choisi parmi les copolymères, en particulier statistiques, comprenant des unités oxyde d'éthylène, oxyde de propylène et/ou oxyde de butylène.

9. Composition lubrifiante aqueuse selon la revendication précédente, comprenant de 0,001 % à 80 % massique de polyalkylène glycol(s), de préférence de 0,1 % à 15 % massique, plus préférentiellement de 1 % à 10 % massique, en particulier de 2 % à 5 % massique de polyalkylène glycol(s), par rapport à la masse totale la composition.

10. Composition lubrifiante aqueuse selon l'une quelconque des revendications précédentes, comprenant en outre au moins un additif choisi parmi des agents anti-mousses, des biocides, des régulateurs de pH, des inhibiteurs de corrosion, des agents séquestrant, des agents passivant les métaux, des agents émulsifiants et leurs mélanges.

11. Utilisation d'une composition lubrifiante aqueuse telle que définie selon l'une quelconque des revendications précédentes à titre de lubrifiant dans un procédé de travail des métaux.

12. Utilisation de la combinaison d'au moins une huile de ricin alcoxylée, en particulier éthoxylée, et d'au moins un composé anti-usure phosphoré et/ou soufré, en particulier soufré, dans une composition lubrifiante aqueuse comprenant au moins un polysaccharide, pour améliorer ses propriétés anti-usure et/ou extrême-pression.

## Patentansprüche

1. Wässrige Schmiermittelzusammensetzung, insbesondere für die Metallbearbeitung, umfassend mindestens:
- mindestens 50 Massen-% Wasser, vorzugsweise Osmosewasser;
- 0,01 bis 10 Massen-% mindestens eines Polysaccharids,
- 0,1 bis 10 Massen-% mindestens eines alkoxylierten, insbesondere ethoxylierten, Rizinusöls, und
- 0,1 bis 10 Massen-% mindestens einer schwefelhaltigen und/oder phosphorhaltigen Verschleißschutzverbindung,
wobei die Prozentsätze auf die Gesamtmasse der Zusammensetzung bezogen ausgedrückt sind.

2. Wässrige Schmiermittelzusammensetzung nach Anspruch 1, umfassend zwischen 50 und 90 Massen-% Wasser, insbesondere Osmosewasser, vorzugsweise zwischen 60 und 75 Massen-%, bezogen auf das Gesamtgewicht der Zusammensetzung.

3. Wässrige Schmiermittelzusammensetzung nach Anspruch 1 oder 2, wobei es sich bei dem alkoxylierten Rizinusöl um ein durch Umsetzung von Rizinusöl mit Ethylenoxid in einem Molverhältnis von Rizinusöl:Ethylenoxid zwischen 1:1 und 1:100 und insbesondere von 1:35 erhaltenes ethoxyliertes Rizinusöl handelt.

4. Wässrige Schmiermittelzusammensetzung nach einem der vorhergehenden Ansprüche, umfassend 1 bis 10 Massen-% alkoxyliertes Rizinusöl bzw. alkoxylierte Rizinusöle, spezieller 2 bis 5 Massen-%, bezogen auf die Gesamtmasse der Zusammensetzung.

5. Wässrige Schmiermittelzusammensetzung nach einem der vorhergehenden Ansprüche, umfassend 0,1 bis 5 Massen-% Polysaccharid(e), insbesondere 0,1 bis 3,5 Massen-% und spezieller 0,2 bis 1 Massen-%, bezogen auf die Gesamtmasse der Zusammensetzung.

6. Wässrige Schmiermittelzusammensetzung nach einem der vorhergehenden Ansprüche, wobei die schwefelhaltige(n) und/oder phosphorhaltige(n) Verschleißschutzverbindung(en) aus Organoschwefelverbindungen vom Typ schwefelhaltige Fettsäure mit 8 bis 22 Kohlenstoffatomen, vorzugsweise 12 bis 18 Kohlenstoffatomen, vorzugsweise in neutralisierter Form, insbesondere durch anorganische Alkalisierungsmittel oder Alkanolamine neutralisierter Form, ausgewählt ist bzw. sind.

7. Wässrige Schmiermittelzusammensetzung nach einem der vorhergehenden Ansprüche, umfassend 0,1 bis 5 Massen-% phosphorhaltige und/oder schwefelhaltige, vorzugsweise schwefelhaltige, Verschleißschutzverbindung(en), spezieller 0,5 bis 3,0 Massen-%, bezogen auf die Gesamtmasse der Zusammensetzung.

8. Wässrige Schmiermittelzusammensetzung nach einem der vorhergehenden Ansprüche, wobei die Zusammensetzung ferner mindestens ein Polyalkylenglykol umfasst, das insbesondere aus Copolymeren, insbesondere statistischen Copolymeren, die Ethylenoxid-, Propylenoxid- und/oder Butylenoxid-Einheiten umfassen, ausgewählt ist.

9. Wässrige Schmiermittelzusammensetzung nach dem vorhergehenden Anspruch, umfassend 0,001 bis 80 Massen-% Polyalkylenglykol(e), vorzugsweise 0,1 bis 15 Massen-%, weiter bevorzugt 1 bis 10 Massen-%, insbesondere 2 bis 5 Massen-%, Polyalkylenglykol(e), bezogen auf die Gesamtmasse der Zusammensetzung.

10. Wässrige Schmiermittelzusammensetzung nach einem der vorhergehenden Ansprüche, ferner umfassend mindestens ein Additiv, das aus Antischaummitteln, Bioziden, pH-Reglern, Korrosionsinhibitoren, Sequestriermitteln, Metallpassivatoren, Emulgatoren und Mischungen davon ausgewählt ist.

11. Verwendung einer wässrigen Schmiermittelzusammensetzung nach einem der vorhergehenden Ansprüche als Schmiermittel bei einem Metallbearbeitungsverfahren.

12. Verwendung der Kombination von mindestens einem alkoxylierten, insbesondere ethoxylierten, Rizinusöl und mindestens einem phosphor- und/oder schwefelhaltigen, insbesondere schwefelhaltigen, Verschleißschutzmittel in einer wässrigen Schmiermittelzusammensetzung, die mindestens ein Polysaccharid umfasst, zur Verbesserung ihrer Verschleißschutz- und/oder Höchstdruckeigenschaften.

## Claims

1. Aqueous lubricating composition, in particular for metalworking, comprising at least:
- at least 50% by weight of water, preferably of osmosed water;
- from 0.01% to 10% by weight of at least one polysaccharide;
- from 0.1% to 10% by weight of at least one alkoxylated, in particular ethoxylated, castor oil; and
- from 0.1% to 10% by weight of at least one sulfur-containing and/or phosphorus-containing antiwear compound,
the percentages being expressed with respect to the total weight of the composition.

2. Aqueous lubricating composition according to Claim 1, comprising between 50% and 90% by weight of water, in particular of osmosed water, preferably between 60% and 75% by weight, with respect to the total weight of the composition.

3. Aqueous lubricating composition according to Claim 1 or 2, in which the alkoxylated castor oil is an ethoxylated castor oil, obtained by reaction of castor oil with ethylene oxide, in a castor oil:ethylene oxide molar ratio of between 1:1 and 1:100 and in particular of 1:35.

4. Aqueous lubricating composition according to any one of the preceding claims, comprising from 1% to 10% by weight of alkoxylated castor oil(s), more particularly from 2% to 5% by weight, with respect to the total weight of the composition.

5. Aqueous lubricating composition according to any one of the preceding claims, comprising from 0.1% to 5% by weight of polysaccharide(s), in particular from 0.1% to 3.5% by weight and more particularly from 0.2% to 1% by weight, with respect to the total weight of the composition.

6. Aqueous lubricating composition according to any one of the preceding claims, in which said sulfur- and/or phosphorus-containing antiwear compound(s) are chosen from organosulfur compounds of sulfur-containing fatty acid type comprising from 8 to 22 carbon atoms, preferably from 12 to 18 carbon atoms, preferably in a neutralized form, in particular a form neutralized with inorganic basifying agents or alkanolamines.

7. Aqueous lubricating composition according to any one of the preceding claims, comprising from 0.1% to 5% by weight of phosphorus- and/or sulfur-containing, preferably sulfur-containing, antiwear compound(s), more particularly from 0.5% to 3.0% by weight, with respect to the total weight of the composition.

8. Aqueous lubricating composition according to any one of the preceding claims, said composition additionally comprising at least one polyalkylene glycol, in particular chosen from copolymers, in particular random copolymers, comprising ethylene oxide, propylene oxide and/or butylene oxide units.

9. Aqueous lubricating composition according to the preceding claim, comprising from 0.001% to 80% by weight of polyalkylene glycol(s), preferably from 0.1% to 15% by weight, more preferentially from 1% to 10% by weight, in particular from 2% to 5% by weight, of polyalkylene glycol(s), with respect to the total weight of the composition.

10. Aqueous lubricating composition according to any one of the preceding claims, additionally comprising at least one additive chosen from antifoaming agents, biocides, pH regulators, corrosion inhibitors, sequestering agents, metal passivating agents, emulsifying agents and their mixtures.

11. Use of an aqueous lubricating composition as defined according to any one of the preceding claims as lubricant in a metalworking process.

12. Use of the combination of at least one alkoxylated, in particular ethoxylated, castor oil and of at least one phosphorus-containing and/or sulfur-containing, in particular sulfur-containing, antiwear compound in an aqueous lubricating composition comprising at least one polysaccharide, in order to improve its antiwear and/or extreme-pressure properties.
